Europäisches Patentamt

European Patent Office

Office européen des brevets

(11) Veröffentlichungsnummer: **0 317 819**
**A2**

## (12) EUROPÄISCHE PATENTANMELDUNG

(21) Anmeldenummer: 88118548.2

(22) Anmeldetag: 08.11.88

(51) Int. Cl.⁴: **G01F 15/06 , G01F 15/00**

(30) Priorität: 25.11.87 DE 8715591 U

(43) Veröffentlichungstag der Anmeldung:
**31.05.89 Patentblatt 89/22**

(84) Benannte Vertragsstaaten:
**DE FR GB NL**

(71) Anmelder: **STADTWERKE KREFELD
AKTIENGESELLSCHAFT**
**St. Töniser Strasse 124**
**D-4150 Krefeld 1(DE)**

(72) Erfinder: **Wernken, Ewald**
**Kemmerhofstrasse 185**
**D-4150 Krefeld 1(DE)**

(74) Vertreter: **Stark, Walter, Dr.-Ing.**
**Moerser Strasse 140**
**D-4150 Krefeld(DE)**

(54) **Rollenzählwerk, insbesondere für Gasmengenzähler.**

(57) Die Erfindung betrifft ein Rollenzählwerk, insbesondere für Gasmengenzähler, mit einem Zählwerksrahmen und mehreren darin angeordneten, um eine gemeinsame Achse drehbaren Ziffernrollen, von denen wenigstens eine einen Signalgeber aufweist, wobei am Zählwerksrahmen im Wirkungsbereich des Signalgebers ein Abtastglied angeordnet ist, von dem Anschlußleitungen ausgehen.

Um ein Rollenzählwerk der eingangs beschriebenen Gattung so zu verbessern, daß es bei Bedarf auf einfache Weise für Fernauslesung umgerüstet werden kann, soll der Zählwerksrahmen einen Aufnahmekanal für einen darin einführbaren Trägerstab mit dem Abtastglied aufweisen, wobei die Anschlußleitungen im oder am Trägerstab verlegt sind und der Trägerstab mit einer eigenen Plombierung im Aufnahmekanal fixierbar ist.

Fig. 1

Xerox Copy Centre

## Rollenzählwerk, insbesondere für Gasmengenzähler

Die Erfindung betrifft ein Rollenzählwerk, insbesondere für Gasmengenzähler, mit einem Zählwerksrahmen und mehreren darin angeordneten, um eine gemeinsame Achse drehbaren Ziffernrollen, von denen wenigstens eine einen Signalgeber aufweist, wobei am Zählwerksrahmen im Wirkungsbereich des Signalgebers ein Abtastglied angeordnet ist, von dem Anschlußleitungen ausgehen.

Üblicherweise werden die Lieferungen öffentlicher Versorgungsunternehmen für Elektrizität, Gas, Wasser und Fernwärme beim Einzelverbraucher mit entsprechenden Zählern erfaßt. Diese Zähler müssen vom Versorgungsunternehmen von Zeit zu Zeit abgelesen werden, damit dem Verbraucher die gelieferten Mengen in Rechnung gestellt werden können. Um die Datenerfassung und die Datenverarbeitung zu vereinfachen, ist bereits eine Fernauslesung der Zähler in Erwägung gezogen worden. Dazu müssen jedoch die entsprechenden Zähler mit automatisch auslesbaren Zählwerken ausgerüstet sein.

Bekannt in diesem Zusammenhang sind Rollenzählwerke für Balgengaszähler, bei denen eine Ziffernrolle des Zählwerkes mit einem Permanetmagneten versehen ist und bei denen am Zählwerksrahmen in einem festgelegten Abstand von dieser Ziffernrolle ein Schutzgasschalter befestigt ist, dessen Anschlußleitungen von einer Anschlußpatine aus dem Gehäuse herausgeführt sind.

Da Art und Umfang einer möglichen oder notwendigen zukünftigen Datenerfassung noch nicht absehbar sind, würde die Ausrüstung sämtlicher neu hergestellter Zähler mit derartigen Impulsgebern unverhältnismäßig hohe Kosten verursachen. Bei der Nachrüstung vorhandener Zähler müßte der Zähler ausgebaut, das Zählwerk unter Entfernung des Eich-Hauptstempels entfernt werden, um Permanentmagnet, Schutzgasschalter und Zubehör anzubringen. Anschließend müßte der Zähler nachgeeicht werden. Auch das wäre unverhältnismäßig teuer.

Aufgabe der Erfindung ist es, ein Rollenzählwerk der eingangs beschriebenen Gattung so zu verbessern, daß es bei Bedarf auf einfache Weise für Fernauslesung umgerüstet werden kann.

Diese Aufgabe wird dadurch gelöst, daß der Zählwerksrahmen einen Aufnahmekanal für einen darin einführbaren Trägerstab mit dem Abtastglied aufweist, wobei die Anschlußleitungen im oder am Trägerstab verlegt sind und der Trägerstab mit einer eigenen Plombierung im Aufnahmekanal fixierbar ist.

Dieses Rollenzählwerk ist für Fernauslesung vorbereitet und kann jederzeit dafür umgerüstet werden. Solange die Fernauslesung nicht praktiziert wird, kann der Aufnahmekanal mit einem Blindstopfen, der gegebenenfalls auch plombiert wird, verschlossen werden. Bei Einführung der Fernauslesung wird der Blindstopfen entfernt und dafür der Trägerstab mit dem Abtastglied in den Aufnahmekanal eingeführt und plombiert. Die Anschlußleitungen können mit einem für die Fernauslesung bestimmten, fest installierten Leitungsnetz verbunden werden, sie können aber auch an einem Zusatzgerät enden, an das ein mobiles Datenerfassungsgerät angeschlossen wird.

Um unbefugtes Manipulieren am Zählwerk selbst zu verhindern, ist es zweckmäßig, wenn der Aufnahmekanal zu den Ziffernrollen hin geschlossen ist.

Ein unbefugtes Manipulieren des Zählwerkes läßt sich aber auch durch konstruktive Maßnahmen unterbinden, insbesondere dann, wenn der Aufnahmekanal an einem Ende offen ist und am anderen Ende einen Anschlag für den Trägerstab aufweist, so daß der Trägerstab der Länge nach in den Aufnahmekanal eingeschoben wird. Da es sich um verhältnismäßig kleine Bauteile handelt, reicht die Öffnung des Aufnahmekanals in der Regel nicht aus, um von dort aus Manipulationen am Zählwerk vorzunehmen, denn der Anschlag am anderen Ende des Aufnahmekanals dient zur Fixierung und Ausrichtung des Trägerstabs bzw. des daran angeordneten Abtastgliedes im Hinblick auf die mit dem Signalgeber versehene Ziffernrolle. Es versteht sich, daß auch mehrere Ziffernrollen mit Signalgeber versehen sein können und daß der Trägerstab dann mehrere zugeordnete Abtastglieder aufweisen kann.

Der Trägerstab wird zweckmäßig im Bereich des offenen Endes des Aufnahmekanals außerhalb des Zählwerksrahmens plombiert und fixiert. Dazu kann der Trägerstab an seinem über das offene Ende des Aufnahmekanals vor stehenden Ende wenigstens eine Plombierbohrung aufweisen.

Um bei der späteren Ausrüstung für Fernauslesung Irrtümer und Fehlschaltungen zu vermeiden, ist es zweckmäßig, wenn die Querschnitte des Aufnahmekanals und des Trägerstabes für eine unverwechselbare Anordnung des Trägerstabes mit Abtastglied relativ zu den Ziffernrollen ausgebildet sind.

Eine bevorzugte Ausführung der Erfindung ist dadurch gekennzeichnet, daß der Aufnahmekanal in einem gesonderten, mit dem Zählwerksrahmen verbindbaren Bauteil angeordnet ist. Das ermöglicht es, auch vorhandene Zähler nachträglich noch erfindungsgemäß auszurüsten. Die Verbindung zwischen dem Bauteil mit dem Aufnahmekanal und dem Gehäuse kann den jeweils gegebenen Umständen angepaßt werden. Klemm-, Rast- und/oder Schraubverbindungen sind ebenso möglich wie nicht lösbare Verbindungen, z. B. Kleb- oder Schweißverbindungen. Die Ausrüstung eines derartigen, bestehenden Zählers mit einem oder mehreren Signalgebern kann im Zuge von Reparaturarbeiten erfolgen, wenn der Zähler ohnehin ausgebaut und das Zählwerk geöffnet werden muß.

Weitere vorteilhafte Ausgestaltungen sind in den Ansprüchen 9 bis 14 angegeben.

Im folgenden wird ein in der Zeichnung dargestelltes Ausführungsbeispiel der Erfindung erläutert; es zeigen:

Fig. 1 in schematischer Darstellung die Ansicht eines Rollenzählwerkes mit geöffnetem Gehäuse,

Fig. 2 eine Ansicht in Richtung II-II auf den Gegenstand nach Fig. 1,

Fig. 3 die Ansicht einer Ziffernrolle mit Permanentmagneten,

Fig. 4 einen Radialschnitt durch den Gegenstand nach Fig. 3,

Fig. 5 die Ansicht eines Trägerstabes mit Schutzgasschalter,

Fig. 6 den Gegenstand nach Fig. 5 in einer anderen Projektion.

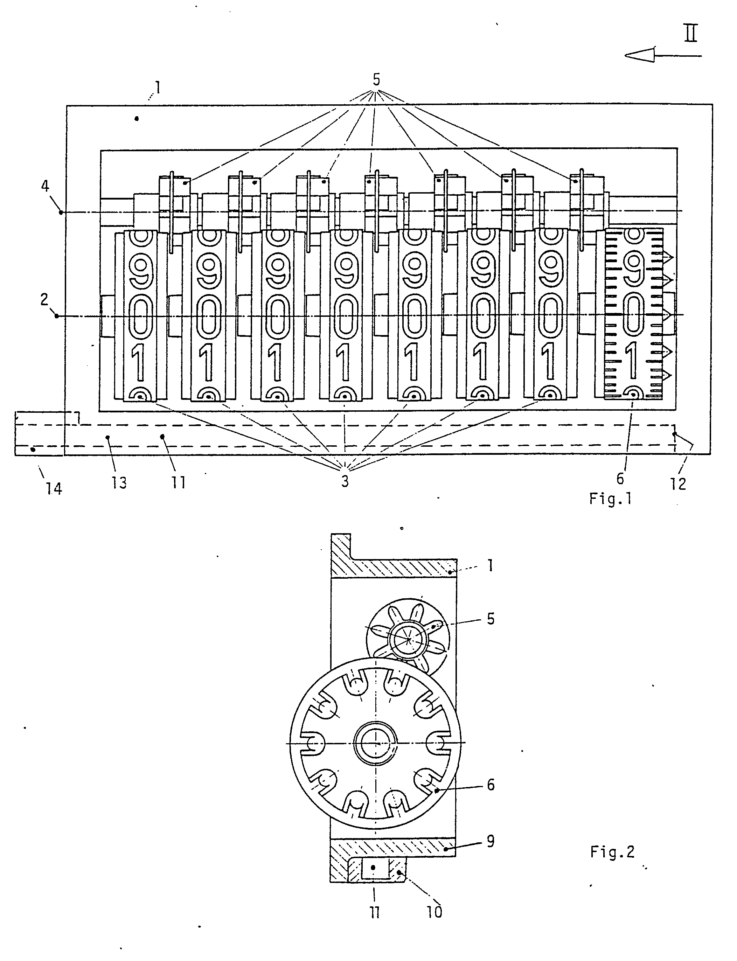

Das in der Zeichnung dargestellte Rollenzählwerk weist einen Zählwerksrahmen 1 aus Kunststoff auf, in dem auf einer gemeinsamen Achse 2 eine Reihe von Ziffernrollen 3 frei drehbar gelagert sind. Parallel zur Achse 2 erstreckt sich eine weitere Achse 4 für darauf gelagerte Schaltrollen 5. Ein nicht dargestellter Antrieb greift an der sogenannten Ziffern-Anfangsrolle 6 auf der rechten Seite der Fig. 1 an.

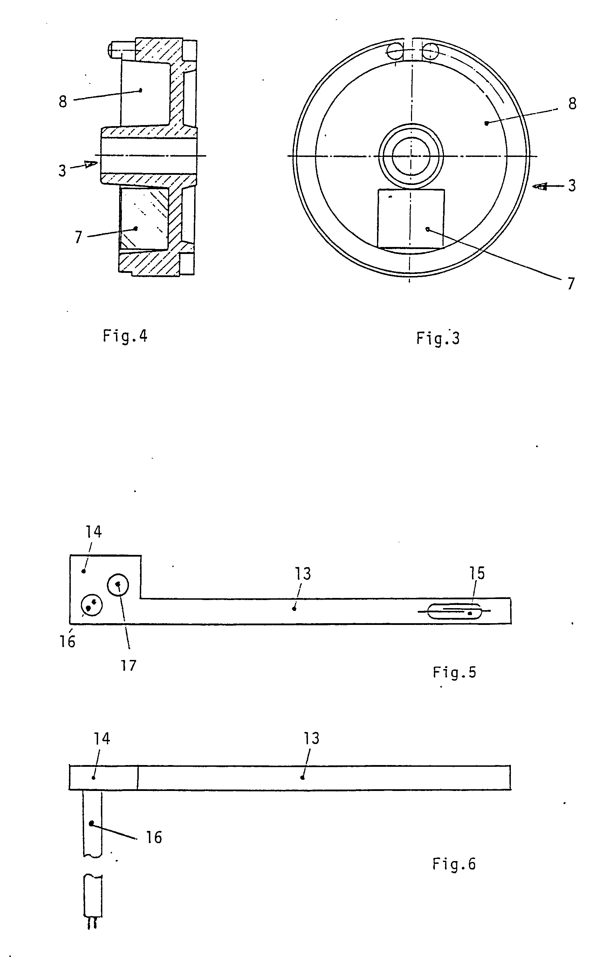

Aus den Figuren 3 und 4 entnimmt man, daß eine der Ziffernrollen 3 mit einem Permanentmagneten 7 ausgerüstet ist. Der Permanentmagnet 7 ist außermittig in der kreisringförmigen Ausnehmung 8 der Ziffernrolle 3 befestigt.

An die Außenseite einer den Ziffernrollen 3 benachbarten Wandung 9, in Fig. 1 und 2 der unteren Wandung, ist ein langgestrecktes Bauteil 10 angeklebt, das sich bei der dargestellten Ausführung über die gesamte Länge 1 erstreckt. Dieses Bauteil 10 besitzt eine Ausnehmung, die zusammen mit der Wandung 9 einen sich längs der Ziffernrollen 3 erstreckenden Aufnahmekanal 11 bildet. Der Aufnahmekanal 11 ist an einem Ende, in Fig. 1 auf der linken Seite, offen und am gegenüberliegenden Ende geschlossen, so daß dort ein Anschlag 12 gebildet ist. Der Aufnahmekanal 11 besitzt bei der dargestellten Ausführung einen rechteckigen Querschnitt. Ein in den Aufnahmekanal 11 einführbarer Trägerstab 13 besitzt einen entsprechend angepaßten Querschnitt und eine Länge, die etwas größer ist als die Länge des Aufnahmekanals 11, so daß der in den Aufnahmekanal 11 eingeschobene Trägerstab 13 zumindest mit einer Verbreiterung 14 den Aufnahmekanal 11 überragt.

Am Trägerstab 13 ist ein Schutzgasschalter 15 befestigt, und zwar derart, daß der Schutzgasschalter 15 bei in den Aufnahmekanal 11 eingeschobenem Trägerstab 13 im Wirkungsbereich des Permanentmagneten 7 liegt. Anschlußleitungen 16 für den Schutzgasschalter 15 sind am oder im Trägerstab 13 verlegt und an der Verbreiterung 14 herausgeführt. Die Verbreiterung 14 weist außerdem eine Plombierbohrung 17 auf, so daß der in den Aufnahmekanal 11 eingeschobene Trägerstab 13 mit einer eigenen Plombierung versehen werden kann, die auch den Trägerstab 13 im Aufnahmekanal 11 fixiert.

Solange der Trägerstab 13 mit Schutzgasschalter 15 nicht benötigt wird, kann der Aufnahmekanal 11 durch einen nicht dargestellten Blindstopfen verschlossen werden.

Das Bauteil 10 mit dem Aufnahmekanal 11 kann nachträglich an den Zählwerksrahmen eines vorhandenen Rollenzählwerks angeschlossen werden. Der Aufnahmekanal 11 kann aber auch unmittelbar am Zählwerksrahmen angeordnet und ausgebildet sein.

## Ansprüche

1. Rollenzählwerk, insbesondere für Gasmengenzähler mit einem Zählwerksrahmen und mehreren darin angeordneten, um eine gemeinsame Achse drehbaren Ziffernrollen, von denen wenigstens eine einen Signalgeber aufweist, wobei am Zählwerksrahmen im Wirkungsbereich des Signalgebers ein Abtastglied angeordnet ist, von dem Anschlußleitungen ausgehen, dadurch gekennzeichnet, daß der Zählwerksrahmen (1) einen Aufnahmekanal (11) für einen darin einführbaren Trägerstab (13) mit dem Abtastglied (15) aufweist, wobei die Anschlußleitungen (16) am Trägerstab (13) verlegt sind und der Trägerstab (13) mit einer eigenen Plombierung (17) im Aufnahmekanal (11) fixierbar ist.

2. Rollenzählwerk nach Anspruch 1, dadurch gekennzeichnet, daß der Aufnahmekanal (11) zu den Ziffernrollen (3) hin geschlossen ist.

3. Rollenzählwerk nach Anspruch 1 oder 2, dadurch gekennzeichnet, daß der Aufnahmekanal (11) an einem Ende offen ist und am anderen Ende einen Anschlag (12) für den Trägerstab (13) aufweist.

4. Rollenzählwerk nach einem der Ansprüche 1 bis 3, dadurch gekennzeichnet, daß der Trägerstab (13) im Bereich des offenen Endes plombiert und fixiert ist.

5. Rollenzählwerk nach einem der Ansprüche 1 bis 4, dadurch gekennzeichnet, daß der Trägerstab (13) an seinem über das offene Ende des Aufnahmekanals (11) vorstehenden Ende wenigstens eine Plombierbohrung (17) aufweist.

6. Rollenzählwerk nach einem der Ansprüche 1 bis 5, dadurch gekennzeichnet, daß die Querschnitte des Aufnahmekanals (11) und des Trägerstabes (13) für eine unverwechselbare Anordnung des Trägerstabs (13) mit dem Abtastglied (15) relativ zu den Ziffernrollen (3) ausgebildet sind.

7. Rollenzählwerk nach einem der Ansprüche 1 bis 6, dadurch gekennzeichnet, daß der Aufnahmekanal (11) in einem gesonderten, mit dem Gehäuse (1) verbindbaren Bauteil (10) angeordnet ist.

8. Rollenzählwerk nach einem der Ansprüche 1 bis 7, dadurch gekennzeichnet, daß der Aufnahmekanal (11) bei nicht vorhandenem Trägerstab (13) im Neuzustand des Zählwerksgehäuses durch einen entfernbaren Teil des Gehäuses abgedeckt ist bzw. durch einen Blindstopfen verschlossen und außerhalb des Zählwerksgehäuses fixiert und plombiert werden kann.

9. Rollenzählwerk nach einem der Ansprüche 1 bis 8, dadurch gekennzeichnet, daß der Aufnahmekanal (11) sich parallel zur Achse (2) der Ziffernrollen (3) erstreckt.

10. Rollenzählwerk nach einem der Ansprüche 1 bis 8, dadurch gekennzeichnet, daß der Aufnahmekanal (11) sich unter einem Winkel zur Achse (2) der Ziffernrollen (3) erstreckt.

11. Rollenzählwerk nach einem der Ansprüche 1 bis 10, dadurch gekennzeichnet, daß der Signalgeber ein Permanentmagnet (7) und das Abtastglied ein Schutzgasschalter (15) oder eine Hallsonde ist.

12. Rollenzählwerk nach einem der Ansprüche 1 bis 11, dadurch gekennzeichnet, daß zur Vermeidung einer Ungleichgewichtigkeit der Ziffernrolle (3) auf der dem Permanentmagneten (7) gegenüberliegenden Seite bezogen auf die Drehachse der Ziffernrolle ein Ausgleichsgewicht befestigt ist.

13. Rollenzählwerk nach einem der Ansprüche 1 bis 10, dadurch gekennzeichnet, daß der Signalgeber ein Metallteil und das Abtastglied ein induktiver oder kapazitiver Aufnehmer ist.

14. Rollenzählwerk nach einem der Ansprüche 1 bis 10, dadurch gekennzeichnet, daß der Signalgeber ein Reflektor und das Abtastglied ein lichtelektrischer Aufnehmer ist.

Fig.1

Fig.2

8

3

7

Fig.4

8

3

7

Fig.3

14

13

15

16

17

Fig.5

14

13

16

Fig.6